# FASCICULE DE BREVET EUROPEEN

(11) **EP 3 003 619 B1**
(45) Date de publication et mention de la délivrance du brevet: **23.08.2017**
(21) Numéro de dépôt: 14731731.7
(22) Date de dépôt: 27.05.2014
(51) Int. Cl.: B23B 51/00, B23C 5/10, B23D 77/00, B24B 3/06, B24B 3/24, B24B 3/26

(54) **OUTIL COUPANT ROTATIF PRESENTANT UNE ARETE DE COUPE EN PLUSIEURS MATERIAUX.**
DREHENDES WERKZEUG MIT EINER SCHNEIDEKANTE AUS VERSCHIEDENEN WERKSTOFFEN
ROTARY CUTTING TOOL WITH A CUTTING EDGE MADE OF SEVERAL MATERIALS

(30) Priorité: 29.05.2013 FR 1354887
(43) Date de publication de la demande: 13.04.2016
(73) Titulaire: Mecachrome France, 37403 Amboise Cedex (FR)
(72) Inventeur: DUVAL, Laurent, F-53170 Meslay du Maine (FR)
(74) Mandataire: Benech, Frédéric
(86) Numéro de dépôt international: PCT/FR2014/051236
(87) Numéro de publication internationale: WO 2014/191673

(56) Documents cités:
- EP-A1- 2 457 678
- DE-A1- 3 208 282
- DE-A1-102008 052 743
- JP-A- 2000 043 006
- US-A- 2 858 718

## Description

La présente invention concerne un outil de coupe rotatif composite selon le préambule de la revendication 1. Elle concerne également un procédé de fabrication selon le préambule de la revendication 9.

Un tel outil et un tel procédé sont connus du document US 2 858 718. Elle trouve une application particulièrement importante bien que non exclusive dans le domaine de l'usinage et notamment pour les opérations de coupes par enlèvement de copeaux telles que l'alésage, le fraisage ou le perçage.

Pour ce faire il est connu d'utiliser des outils mono-matériau adaptés à une condition spécifique de coupe privilégiée comme la vitesse de coupe, la température admissible par l'outil, l'usure ou la fragilité acceptables de l'outil, son coût, etc.

De tels dispositifs présentent cependant des inconvénients.

Le choix de la condition spécifique privilégiée se fait en effet au détriment des autres conditions.

Il est par exemple connu de faire des outils rotatifs coupant en métal ou en carbure. Ces outils présentent une grande résistance mécanique pour un coût réduit et admettent des vitesses de rotation faible.

Il est également connu d'utiliser des outils multi-matériaux brasés comprenant une partie en matériau céramique ou diamant du type CBN ou PCD (CBN étant les initiales anglo-saxones de Cubic Boron Nitride et PCD de Polycristallin Diamond) comme des forets du type CW/acier ou des inserts du type PCD/CW ou CBN/CW (CW étant le symbole du carbure de Tungstène).

Cependant ce type d'outil présente une faible résistance à l'usure. Il présente également des performances circonscrites dans une gamme de conditions d'utilisation limitée, c'est à dire réduite par rapport aux conditions souhaitables.

Il est également connu d'utiliser des outils coupant en céramique.

De tels outils présentent des performances de coupes supérieures au carbure et permettent d'usiner à grande vitesse notamment grâce à leurs résistances thermiques supportant l'échauffement lors de l'utilisation.

Cependant ce type d'outil présente quant à lui une fragilité accrue et est cassant, et ce particulièrement lors d'utilisation à faibles vitesses. Il présente de plus un coût important par rapport au carbure.

Pour pallier ces inconvénients, il a été proposé de constituer un corps dans un matériau mécaniquement résistant et résiliant comme un matériau métallique ou à liant métallique, surmonté d'une tête coupante en matériau plus performant, comme la céramique.

Cette solution présente néanmoins encore des inconvénients.

Elle introduit des contraintes géométriques complexes notamment du fait de la fragilité de la jonction entre le matériau métallique ou à liant métallique et la céramique, existant entre la tête coupante et le reste du corps, qui doit être compensée par une conformation particulière de l'outil.

En outre, elle propose un outil dont la partie coupante reste mono-matériau et ne permet donc pas d'utiliser les caractéristiques associées des deux matériaux de manière à optimiser la découpe elle-même.

On connaît enfin (DE 10 2008 052 743, JP 2000 043 006, US 2 858 718) des outils bi matières présentant des arêtes continues en au moins deux matériaux différents.

De tels outils déjà décrits depuis 1955 (US 2 858 718) sont cependant limités par leur conception même, étant symétriques et obtenus par soudure de deux matériaux l'un sur l'autre.

La présente invention vise à fournir un outil de coupe rotatif répondant mieux que ceux antérieurement connus aux exigences de la pratique, notamment en ce qu'il va permettre d'effectuer simultanément, sur un même profil coupant, des opérations d'usinage en utilisant des matériaux différents, chacun étant placé dans ses conditions optimales d'utilisation, mais ce de plus, et notamment en améliorant l'attaque de la pièce à usiner à de faibles vitesses du fait d'un excentrement entre pointe de l'outil et axe de rotation.

Avec l'invention et grâce notamment à l'optimisation des conditions de coupes qu'un tel outil autorise, il est possible d'améliorer les performances de vitesse de coupe de manière considérable. Par exemple, en fonction du matériau à usiner, la performance d'un outil concernant sa vitesse de coupes peut être augmentée de l'ordre de 800% pour un perçage dans la fonte (passant de 120 m/mn à 1.000 m/mn pour un outil de diamètre inférieur ou égal à 30 mm par exemple) et de 2600% pour un fraisage dans des alliages à base de nickel (vitesse linéaire de coupe V_{c} passant de 30 m/mn à 800 m/mn pour un outil de diamètre inférieur ou égal à 25 mm).

Dans ce but, l'invention propose essentiellement un outil de coupe rotatif multi-matériaux selon la revendication 1, comportant au moins une arête de coupe continue ou sensiblement continue composée d'au moins deux matériaux séparés différents successifs, l'outil comprenant une âme allongée autour d'un axe (l'axe de rotation) et au moins une lèvre ou filet terminé par l'arête de coupe continue ou sensiblement continue, le coeur ou partie radiale interne de l'âme et la partie distale (c'est à dire la plus proche de l'axe) de la lèvre ou du filet étant formés d'un premier matériau autorisant une faible vitesse de coupe (V_{c} < 50 m/mn et notamment V_{c} < 30 m/mn) et la périphérie ou partie radiale externe de l'âme de l'outil, et la partie proximale de la lèvre terminée par ladite arête de coupe correspondante, étant formées d'un second matériau autorisant une forte vitesse de coupe (V_{c} > 500 m/mn et notamment V_{c} > 700 m/mn).
L'arête de coupe continue ou sensiblement continue est globalement radiale par rapport à son axe de rotation et est constituée le plus proche de l'axe de rotation par le premier matériau, par exemple métallique, et le plus éloigné de l'axe par le second matériau, par exemple en céramique.

L'outil selon l'invention est remarquable en ce que l'extrémité ou sommet de l'outil est excentrée par rapport à l'axe de rotation de l'outil. Avantageusement l'outil forme un foret.

On notera également que par sensiblement continue, on entend une arête présentant longitudinalement une petite discontinuité de largeur inférieure à 5 mm. Autrement dit, l'arête comprend une échancrure à l'interface des matériaux différents le long de l'arête, de largeur inférieure à 5 mm par exemple de 2 mm ou moins. A noter que l'échancrure peut être opérée volontairement ou être due au procédé d'assemblage des matériaux.

Par matériaux séparés différents, on entend deux matériaux indépendants l'un de l'autre, qui ne sont pas intégrés ou mélangés, l'un à l'autre comme dans un alliage.

L'association de deux ou plusieurs matériaux qui vont nécessairement avoir des caractéristiques différentes, permet en effet d'exploiter l'outil à son potentiel maximal de vitesse de coupe, en prévoyant notamment un matériau en périphérie qui autorise une grande vitesse de coupe et un matériau au niveau du coeur de l'outil optimisé pour de plus faibles vitesses ou une vitesse de rotation nulle.

Par autorisant une faible ou une forte vitesse, il faut entendre pouvant fonctionner sans cassure ou usure anormale en conditions nominales d'utilisation de l'outil déterminées par l'homme du métier et ses connaissances de base au vu notamment de la configuration de l'outil.

Un outil tournant est en effet entrainé en rotation autour d'un axe par une broche machine et tourne à une fréquence de rotation déterminée pour une vitesse de coupe donnée.

La vitesse linéaire d'un point C de l'outil varie quant à elle en fonction de sa position sur le rayon de l'outil.

Elle est égale à V_{c} = N ×2ΠR, où N est la fréquence de rotation (par exemple en tours/minute) et R la distance du point C par rapport à l'axe de rotation de l'outil.

Par autorisant une faible ou forte vitesse de coupe, on entend un matériau qui se comporte en conditions nominales d'utilisation à ces vitesses, sans défaut de fabrication (paille par exemple) du matériau, de façon acceptable par l'homme du métier, c'est à dire sans casser et sans usure anormale autre que celle liée à une utilisation respectant les règles de l'art (lubrification suffisante, pression et température exercées et/ou obtenues dans les fourchettes préconisées par les fabricants de matériaux etc...).

Avec l'invention, il va donc être possible d'optimiser le choix du matériau en fonction de sa position par rapport à l'axe de l'outil (confondu avec l'axe de rotation), et donc de la vitesse linéaire qui va lui être imposée.

Dans des modes de réalisation avantageux, on a par ailleurs et/ou de plus recours à l'une et/ou à l'autre des dispositions suivantes :
- l'un des matériaux est un matériau métallique ou à base de carbure avec liant métallique comme du carbure de Tungstène/cobalt (CW/Co, le cobalt (Co) représentant de 5% à 25% en masse) et l'autre matériau est un matériau céramique ou composite à matrice céramique.
La céramique est par exemple du nitrure de silicium. Le matériau métallique ou à base de carbure autorise en effet une faible vitesse de coupe au centre sans être cassant (V_{c} < 30m/mn par exemple), le matériau en céramique, par exemple en nitrure de silicium, autorisant quant à lui de grandes vitesses de coupe en périphérie du fait de sa dureté (V_{c} > 800m/mn).

Par contre il devient cassant à faible vitesse ou à vitesse nulle ;
- le premier matériau est moins cassant que le second matériau aux mêmes conditions d'utilisation ;
- l'outil comprend une âme allongée autour d'un axe (de rotation) et au moins deux lèvres terminées chacune par une arête de coupe, continue ou sensiblement continue, lesdites arêtes de coupe se rejoignant à leurs extrémités pour former le sommet du foret. Avantageusement, l'outil comporte trois lèvres ;
- l'outil comporte une encoche casse copeaux sur l'arête de coupe à l'interface entre matériaux ;
- l'encoche casse copeaux sur l'arête de coupe est décalée par rapport à l'interface entre matériaux ;
- l'extrémité de l'outil, formant fraise, présentant au moins un filet s'étendant le long de l'axe de rotation de l'outil et/ou en bout dudit outil, le filet forme une arête de coupe continue ou sensiblement continue, dont la partie distale est constituée par le premier matériau, par exemple, métallique ou avec liant métallique et la partie proximale par le second matériau, par exemple en céramique. L'extrémité de l'outil, formant fraise peut être par exemple de forme générale tronconique, cylindrique ou hémisphérique à filet droit ou sensiblement hélicoïdal ;
- le matériau métallique ou avec liant métallique est du carbure de tungstène avec liant cobalt, ou un alliage d'acier du type connu sous la dénomination HSS (initiales anglo-saxone de High Speed Steel) ;
- l'arête de coupe est continue ;
- l'arête de coupe est sensiblement continue et présente entre matériaux différents une échancrure de largeur e comprise entre 0, 01 mm et 3 mm, par exemple inférieure à 2 mm ;
- l'outil comporte une arête de coupe composée d'au moins trois matériaux différents successifs ;
- les matériaux différents sont fixés entre eux par brasage sous vide à haute température (> 700°C, par exemple de l'ordre de 800°C) ;
- les matériaux différents sont fixés par un procédé reposant sur des impulsions d'une charge ou de courant électrique associées à une pression.

Elle concerne également un procédé selon la revendication 9, de fabrication d'un outil de coupe allongé autour d'un axe et propre à être rotatif autour dudit axe, dans lequel, à partir d'une barre longitudinale constituée d'un premier matériau et d'au moins une plaque d'une épaisseur l d'un matériau différent, on positionne la plaque sur une extrémité de la barre présentant une surface de jonction de forme complémentaire avec l'extrémité de ladite barre, on les assemble par brasage ou frettage ou soudage diffusion, ou par impulsion d'une charge ou d'un courant électrique dans une poudre puis on taille la barre et la plaque ainsi assemblées par rectification des angles de coupe sur une hauteur suffisante h pour obtenir au moins une arête de coupe continue ou sensiblement continue composée des deux matériaux, caractérisé en ce que l'extrémité de la barre étant cylindrique et comprenant un tenon de section réduite par rapport au diamètre de la barre, et la plaque comportant un évidement de forme complémentaire audit tenon qui y a été inséré avant assemblage, on taille la plaque et la barre sur une hauteur h < l pour former une tête (foret d'outil ou fraise) dont le sommet est dans le premier matériau du tenon et au moins une partie du reste de l'arête de coupe est dans le matériau différent. Selon l'invention, le tenon étant excentré par rapport à l'axe de l'outil, on forme l'outil (le foret) avec une arête de coupe dont les zones multi-matière situées de part et d'autre de la pointe du foret passant par l'axe de l'outil (et de rotation de celui-ci) ne sont pas de longueurs égales.

Avantageusement l'assemblage des matériaux se fait par un brasage sous vide à une température supérieure à 700°C.

Egalement avantageusement l'assemblage est effectué par impulsions d'une charge ou d'un courant électrique, avec certains matériaux sous forme de poudres et/ou d'autres éléments massifs.

Avantageusement l'étape d'assemblage ci-dessus est suivie ou concomitante avec une étape de mise sous pression de l'outil par presse, de sorte qu'il y a recouvrement ou refoulement d'un ou des matériaux l'un sur l'autre ou l'un dans l'autre, même après refroidissement. La continuité de l'arête peut ainsi être assurée.

Ici l'homme du métier détermine en fonction de la forme de la matière (poudre, morceaux massifs) et des nuances de matériaux retenus pour l'outil, les valeurs des intensités et/ou des tensions et leurs caractéristiques, de façon connue en elle-même en technologies des poudres ou en technologies connues de l'homme du métier sous la dénomination procédés dits SPS (acronyme anglais de Spark Plasma Sintering) ou PECS (acronyme anglais de Pulsed Electric Current Sintering).

Dans un autre mode de réalisation avantageux on réalise de plus une encoche casse copeaux sur l'arête de coupe à un emplacement différent de l'interface entre les deux matériaux.

L'encoche peut également être réalisée à l'interface.

L'invention sera mieux comprise à la lecture de la description qui suit de modes de réalisation donnés ci-après à titre d'exemples non limitatifs. La description se réfère aux dessins qui l'accompagnent dans lesquels :
La figure 1A est une vue de dessus d'une extrémité de foret selon un premier mode de réalisation de l'invention.
La figure 1B est une vue de dessus partielle d'une extrémité de foret selon un deuxième mode de réalisation de l'invention.
La figure 1C est une vue en coupe selon IC-IC de la figure 1B au niveau de l'échancrure.
La figure 1D est une vue partielle d'une arête de coupe avec encoche H casse copeaux selon un mode de réalisation de l'invention.
La figure 2 est une vue en perspective de l'extrémité de foret de la figure 1.
La figure 3 est une vue de dessus d'un autre mode de réalisation d'un foret selon l'invention.
Les figures 4 et 5 sont respectivement une vue latérale et une vue en perspective d'une extrémité d'un autre mode de réalisation de forets selon l'invention.
Les figures 6A à 6C représentent schématiquement les étapes d'un mode de réalisation d'un procédé de fabrication d'un outil pour forer selon l'invention.
La figure 7 représente l'extrémité en coupe et en vue de dessus du foret obtenu en référence aux figures 6A à 6C.
Les figures 8A à 8C représentent schématiquement les étapes d'un autre procédé de fabrication d'un outil pour fraisage.
Les figures 9 et 10 montrent respectivement des vues en perspective de deux modes différents de réalisation d'un outil pour fraisage avec tête hémisphérique (figure 9) et avec tête tronconique ou cylindrique (figure 10).

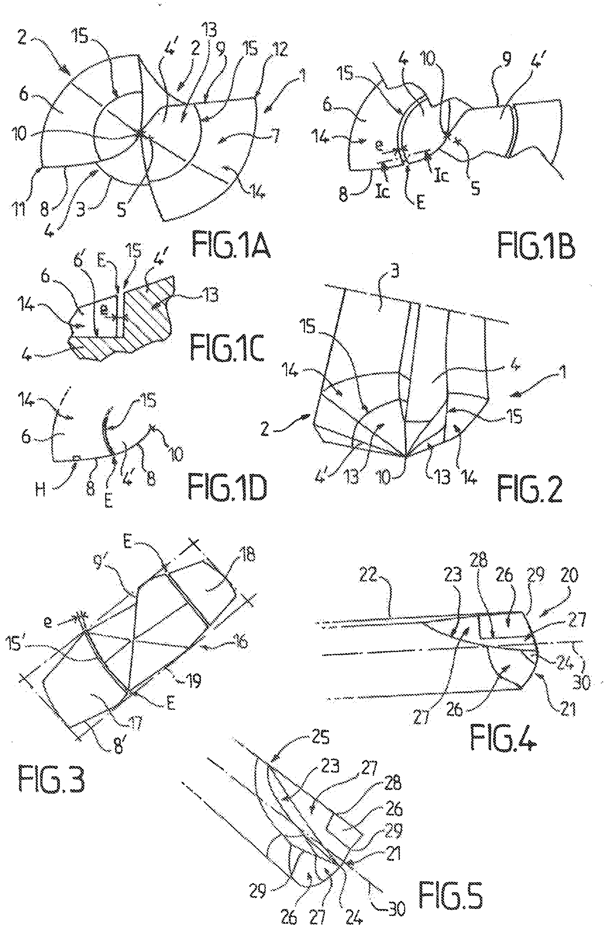

Les figures 1A et 2 montrent en vue de dessus et en perspective un foret 1 comprenant une tête 2, formant l'extrémité coupante de l'outil, et un corps 3 par exemple cylindrique permettant la prise de l'outil et sa mise en rotation.

Dans le mode de réalisation plus particulièrement décrit ici l'outil comprend une âme 4 cylindrique en carbure de tungstène avec liant cobalt, muni d'une extrémité cylindrique 4' et deux ailes ou lèvres 6 et 7 terminées chacune par une arête de coupe 8 et 9 qui se rejoignent à leur extrémité ou sommet 10 du foret de façon excentrée par rapport au centre 5 d'extrémité 4'de l'âme.

Dans le mode de réalisation plus particulièrement décrit ici, dû à l'excentration (par rapport au centre 5) de l'extrémité 10, par laquelle passe l'axe de rotation de l'outil, les parties d'arêtes en un matériau ne sont pas de longueurs égales, les arêtes étant par contre de formes sensiblement identiques (par rotation par rapport à la pointe 10), et présentent par un exemple un profil en S écrasé.

Les lèvres 6 et 7 forment de façon connue en elle-même les surfaces en pente tronconique hélicoïdale des extrémités périphériques du foret.

Selon le mode de réalisation de l'invention plus particulièrement décrit ici, les lèvres présentent une arête continue 8, 9 de la pointe 10 jusqu'à leur extrémité radiale périphérique 11 et 12, ladite arête étant multi-matériau.

Ici les arêtes de coupe 8 et 9 sont donc continues et sont globalement radiales par rapport à l'axe de rotation passant par le sommet 10 du foret.

Chaque arête est coupante et permet l'enlèvement de matière lors de l'utilisation de l'outil.

Plus précisément chaque arête (voir figure 2) est formée du matériau 13 métallique ou avec liant métallique formant l'âme 4 et son extrémité 4', et la partie des lèvres la plus proche du centre 5 (partie distale ou interne) les deux formant le coeur ou partie radiale interne de l'outil, et d'un second matériau céramique 14 plus cassant mais plus résistant à la température, formant la partie radiale externe de l'outil avec la partie des lèvres la plus éloignée de l'axe (partie proximale ou externe).

Chaque arête possède une portion d'arête dans un matériau et une autre portion dans un autre matériau.

Les portions d'arête en un même matériau de chaque arête sont également de longueurs différentes.

Les matériaux 13 et 14 séparés par la ligne de jonction 15, sont rendus solidaires l'un de l'autre par exemple par brasage sous vide à haute température comme cela sera décrit ci-après en référence au procédé plus particulièrement décrit.

Dans la suite des figures 1B à 1D on a utilisé les mêmes numéros de référence pour désigner les mêmes éléments ou des éléments similaires.

La figure 1B montre partiellement en vue de dessus un foret qui comporte deux arêtes de coupe 8 et 9 sensiblement continues, présentant une discontinuité ou échancrure E de largeur e par exemple de 1 mm.

Cette échancrure se retrouve de façon identique tout du long de la jonction 15 entre les matériaux de l'extrémité 4' de l'âme 4 et du reste des ailes ou lèvres 6 et 7.

La figure 1C est une vue en coupe de l'échancrure E selon I_{c}-I_{c} de la figure 1B.

Le matériau par exemple type céramique de l'aile 6 est fixé à l'âme 4 en 6' par exemple par brasage.

La figure 1D montre un autre mode de réalisation de l'arête de coupe 8 de la figure 1B présentant une encoche casse copeaux H sur l'arête mais à distance de l'échancrure E.
H peut également être superposé à E dans en autre mode de réalisation.

A titre d'exemple et pour une utilisation prédéfinie, la profondeur de H est supérieure à la valeur de l'avance au tour, c'est à dire à la longueur de pénétration de l'outil dans la pièce suivant l'axe de rotation de l'outil et ce pour une révolution de façon à garantir la cassure du copeau. Il s'ensuit une coupe de la pièce à usiner, sans discontinuité.

La figure 3 montre un foret 16 selon un autre mode de réalisation de l'invention dans lequel les ailes 17, 18 ou parties périphériques ne s'inscrivent plus dans un cylindre mais dans un parallélépipède (trait mixte 19).

Ici les arêtes coupantes 8', 9' sont sensiblement continues, c'est à dire qu'elles présentent une échancrure E de largeur e par exemple égale à 2 mm. La ligne 15' de jonction forme alors une rainure de section quelconque par exemple rectangulaire et de profondeur correspondant à l'épaisseur du matériau périphérique.

Les figures 4 et 5 montrent un autre mode de réalisation d'un foret 20 selon l'invention. Il comprend une tête 21 de coupe et un corps cylindrique 22 métallique.

Le corps de l'outil et la tête comprennent un évidement 23 formant poche à copeaux, présentant de façon connue en elle-même une surface courbe depuis l'extrémité de la tête ou pointe du foret 24 jusqu'à une zone 25 en amont de la tête.

Dans ce mode de réalisation le second matériau 26, qui diffère du premier matériau 27, est séparé de ce dernier par la ligne (surface) de jonction 28, et présente une seule arête de coupe 29, l'axe de rotation de l'outil 30 étant décalé par rapport à la pointe 24 du foret, qui fonctionne comme une cuillère.

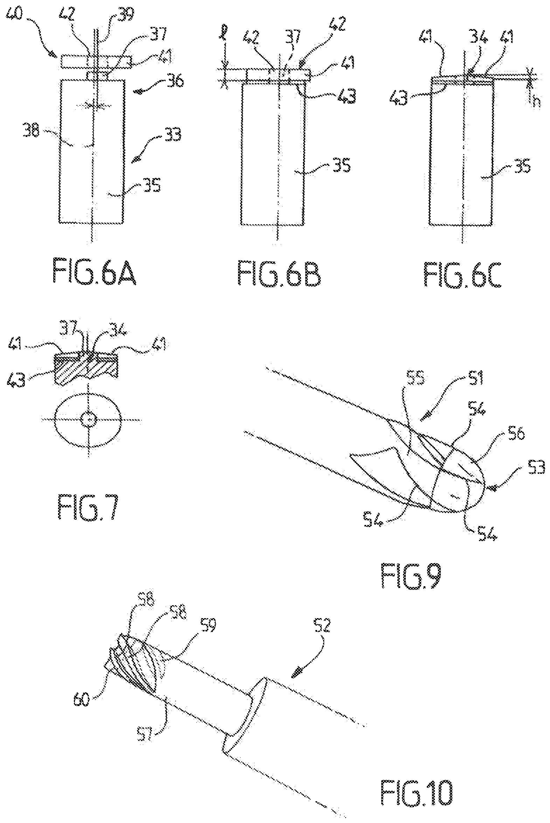

On va maintenant décrire un procédé de fabrication du foret décrit aux figures 1A et 2, en faisant référence aux figures 6A à 6C et 7.

Il implique au moins deux éléments de matériaux différents.

Le premier élément 33 est destiné à former in fine le corps et l'âme 34 (voir 6C) de la tête de l'outil. Il se présente initialement par exemple sous forme d'une barre cylindrique métallique 35 par exemple en alliage du type carbure de Tungstène avec liant cobalt.

Une première opération consiste à réduire le diamètre d'une partie de l'extrémité 36 de la barre cylindrique de manière à former un tenon cylindrique 37 de section de diamètre réduit, qui vient en saillie de l'extrémité de surface plate annulaire.

Le tenon est formé de manière excentrée par rapport à l'axe de symétrie 38 de révolution de la barre.

L'écart entre l'axe du tenon 39 et l'axe de symétrie 38 est compris entre 0% et 50% du diamètre, par exemple 15%.

Le deuxième élément 40 est destiné, quant à lui, à former la partie radiale externe des lèvres ou parties périphériques.

Il est par exemple constitué par un disque cylindrique 41 par exemple en céramique, de même diamètre que la barre.

Le disque 41 comprend un orifice ou évidement 42 traversant, centré de forme complémentaire au tenon, c'est-à-dire de diamètre correspondant pour l'insertion du tenon 37.

Une fois le tenon inséré dans le trou (figure 6B) l'ensemble, dans l'exemple plus particulièrement décrit ici, forme un cylindre à tête excentrée, le tenon pouvant être inclus, affleurant ou dépassant de la surface supérieure 42 du disque.

Les deux matériaux sont alors assemblés de manière à assurer une continuité de la matière. C'est-à-dire qu'ils sont par exemple assemblés par n'importe quel procédé mécanique ou métallurgique assurant une liaison forte tel que brasage, frettage, soudage diffusion ou mettant en oeuvre la métallurgie des poudres.

Cette liaison est symbolisée sur les figures par un double trait 43, sans pour autant que celle-ci ait nécessairement une épaisseur visible.

Avantageusement on utilise ici un brasage sous vide à haute température (800°C notamment).

Egalement avantageusement l'assemblage peut être effectué par des procédés dits SPS (acronyme anglais de Spark Plasma Sintering) ou PECS (acronyme anglais de Pulsed Electric Current Sintering). Les SPS et PECS reposent sur des impulsions crénelées de hautes intensités d'une charge ou d'un courant électrique.

Ces techniques permettent un frittage et/ou un soudage diffusion rapide, localisé, avec une vitesse de montée en température élevée mais de courte durée et avec peu ou pas de croissance cristalline.

Cette répartition de température autorise la formation d'objets de grande compacité à températures globales plus faibles.

L'assemblage comprend en outre une étape de mise sous pression de l'outil par presse (non représentée).

Cette forte pression, compression et le passage de courant électrique permet le forçage du soudage par diffusion. La compression d'une pièce dans l'autre conduit à un recouvrement desdites pièces l'une sur l'autre, même après refroidissement. Elle peut également créer un refoulement de matière chaude issue du tenon ainsi pressé. Le refoulement vient colmater alors les discontinuités internes de la jonction, c'est à dire apporter de la matière à l'interface des deux matériaux.

L'interface forme ainsi un assemblage continu de matière.

Ainsi la longueur de la rainure peut être réduite encore voire rendue nulle, la continuité de l'arête étant ainsi assurée.

La résistance mécanique de la liaison aux impacts est donc également plus importante à l'interface du fait de la continuité de la jonction interface. Cette résistance accrue autorise le positionnement de l'encoche ou de la rainure, dans les modes de réalisation où elle existe, ailleurs qu'à la périphérie radiale de l'interface mais n'importe où sur l'arête.

Dans un tel mode de réalisation le tenon peut être centré.

L'ensemble de la barre et du disque assemblé est alors usiné (figures 6C et 7) pour former le foret à arête continue bimatériaux, le tenon 37 constituant alors l'extrémité de l'âme 34 de la tête.

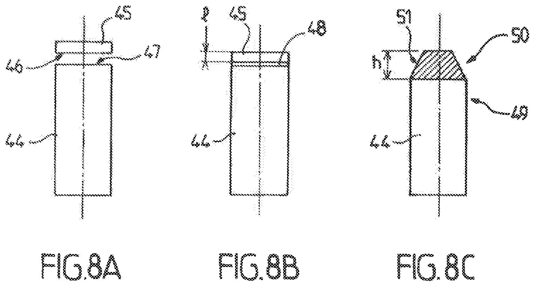

Un autre procédé de fabrication d'outil coupant rotatif est décrit en référence aux figures 8A à 8C, en l'occurrence pour la fabrication d'une fraise.

L'outil est ici encore obtenu à partir d'une barre cylindrique 44 par exemple en alliage du type CW avec liant cobalt et d'un disque en céramique 45, plein, correspondant.

La barre cylindrique 44 et le disque 45 d'épaisseur l, présentent des surfaces planes 46, 47 de coopération l'une avec l'autre, à leurs extrémités.

Ces deux éléments sont assemblés (figure 8B) par un moyen tel qu'évoqué précédemment, à savoir et par exemple par brasage (double trait 48) sous vide à haute température.

L'outil est ensuite formé (voir la représentation schématique de la figure 8C) dans l'assemblage 49 cylindrique de la barre et du disque en créant des évidements longitudinaux 50 constituant au moins une arête 51 sur une hauteur h de longueur supérieure à l'épaisseur du disque l.

On a représenté sur les figures 9 et 10 respectivement deux fraises 51 et 52 obtenues avec le procédé décrit en référence aux figures 8A à 8C.

La figure 9 montre une fraise 51 cylindrique comprenant une tête 53 hémisphérique et des arêtes de coupes 54 hélicoïdales bimatériaux céramique 55 et métal 56.

La longueur de l'arête 54 de coupe continue est supérieure à l'épaisseur du matériau utilisé pour la formation de l'extrémité de la tête.

La fraise 52 comprend quant à elle une tête tronconique 57 munie d'arêtes de coupe hélicoïdales 58 composite.

L'arête coupante parcours alors depuis l'extrémité de la tête jusqu'à l'autre extrémité les différents matériaux 59 et 60 successivement.

L'utilisation d'un outil selon l'invention va maintenant être décrite par exemple en référence au foret de la figure 1.

L'outil de coupe rotatif est d'abord monté sur un moteur tournant (non représenté).

Le montage peut s'effectuer par fixation du corps 3 cylindrique de l'outil par tout moyen mécanique connu (cône morse, etc...)

Une fois mis en rotation, l'outil est mis en contact avec la pièce mécanique à usiner.

La première partie de l'outil à rentrer en contact avec la pièce est l'extrémité ou pointe de la tête 2 en matériau métallique ou avec liant métallique.

Celle-ci possède une vitesse de rotation faible et d'autant plus faible qu'elle est proche de l'axe 10 de rotation où elle devient nulle.

Le matériau choisi pour l'âme est considéré pour être efficace à faible vitesse et peu cassant et permet une première pénétration de l'outil dans la pièce. Il s'agit dans les modes de réalisation plus particulièrement décrits d'un matériau métallique, en alliage métallique, ou du carbure de tungstène avec liant métallique.

Puis les parties périphériques ou ailes (lèvres) 6 et 7 entrent en contact avec la pièce par avancement au fur et à mesure de l'outil dans la pièce.

Les points de ces parties périphériques étant de plus en plus éloignés de l'axe de rotation 10, radialement, ceux-ci ont une vitesse de rotation très supérieure à celle des points de l'âme 4. L'utilisation d'un matériau plus performant mais plus cassant tel que la céramique à partir d'une certaine distance de l'axe 10, va permettre d'obtenir les performances exceptionnelles observées.

La distance à respecter pour le changement de matériaux à partir de l'axe est déterminée par l'homme du métier en fonction des performances recherchées au vu des vitesses de fonctionnement retenues.

Mais par exemple et avantageusement les rapports (sur le rayon du foret ou de l'alésoir) entre le premier matériau central et le second matériau externe est de 1/3 ; 2/3 ou 1/2 ; 1/3 ou 2/3 ; 1/3.

Ainsi, grâce à l'invention et au cours de la progression dans la pièce mécanique chaque partie de l'outil travaille dans des conditions de vitesse de rotation les plus adaptées à sa constitution.

## Revendications

1. Outil de coupe rotatif multi-matériaux, comportant au moins une arête (8, 9, 32, 43, 51, 54, 58) de coupe continue ou sensiblement continue composée d'au moins deux matériaux différents successifs (13, 14, 30, 31, 59, 60), l'outil comprenant une âme allongée autour d'un axe et au moins une lèvre ou filet terminé par l'arête de coupe continue ou sensiblement continue, le coeur ou partie radiale interne de l'âme et la partie distale de la lèvre ou du filet étant formés d'un premier matériau autorisant une faible vitesse de coupe (V_{c} < 50 m/mn) et la périphérie ou partie radiale externe de l'âme de l'outil, et la partie proximale de la lèvre ou du filet terminée par l'arête de coupe correspondante, étant formés d'un second matériau autorisant une forte vitesse de coupe (V_{c} > 500 m/mn), l'arête (8, 9, 32, 43, 51, 54, 58) de coupe continue ou sensiblement continue étant globalement radiale par rapport à l'axe de rotation (5, 28) de l'outil, et constituée le plus proche de l'axe de rotation par le premier matériau (13, 30, 59) et le plus éloigné de l'axe par le second matériau (14, 31, 60), **caractérisé en ce que** l'extrémité ou sommet de l'outil est un point excentré par rapport à l'axe de rotation de l'outil.

2. Outil selon la revendication 1, **caractérisé en ce que** l'un des matériaux (13, 30, 59) est un matériau métallique ou à base de carbure avec liant métallique et l'autre matériau (14, 31, 60) est un matériau céramique ou composite à matrice céramique.

3. Outil selon la revendication 2, **caractérisé en ce que** le matériau avec liant métallique (13, 30, 59) est du carbure de tungstène avec un liant en cobalt.

4. Outil selon l'une quelconque des revendications précédentes, **caractérisé en ce que** il comporte une encoche casse copeaux sur l'arête de coupe à l'interface entre matériaux.

5. Outil selon l'une quelconque des revendications 1 à 3, **caractérisé en ce que** il comporte une encoche casse copeaux sur l'arête de coupe qui est décalée par rapport à l'interface entre matériaux.

6. Outil selon l'une quelconque des revendications précédentes, **caractérisé en ce qu'**il comporte une arête de coupe composée d'au moins trois matériaux successifs.

7. Outil selon l'une quelconque des revendications précédentes, **caractérisé en ce que** l'arête de coupe est sensiblement continue et présente entre matériaux différents une échancrure de largeur e inférieure à 2 mm.

8. Outil selon l'une quelconque des revendications 1 à 6 **caractérisé en ce que** l'arête de coupe est continue.

9. Procédé de fabrication d'un outil de coupe allongé autour d'un axe et propre à être rotatif autour dudit axe dans lequel, à partir d'une barre (35, 44) longitudinale constituée d'un premier matériau (13, 30, 59) et d'au moins une plaque d'épaisseur l d'un matériau différent (14, 31, 60), on positionne la plaque sur une extrémité de la barre (35, 44) présentant une surface de jonction de forme complémentaire avec l'extrémité de la barre, on les assemble par brasage, frettage, soudage , diffusion, ou par impulsions d'une charge ou d'un courant électrique dans une poudre, puis on taille la barre (35, 44) et la plaque ainsi assemblées par rectification des angles de coupe sur une hauteur suffisante h pour obtenir au moins une arête (8, 9, 32, 43, 51, 54, 58) de coupe continue ou sensiblement continue composée des deux matériaux (13, 14, 30, 31, 59, 60), **caractérisé en ce que** l'extrémité de la barre (35, 44) étant cylindrique et comprenant un tenon (37) de section réduite par rapport au diamètre de la barre, et la plaque comportant un évidement (42) de forme complémentaire audit tenon qui y a été inséré avant assemblage, on taille la plaque et la barre sur une hauteur h < l pour former une tête d'outil (1, 16, 20, 24) dont le sommet est dans le premier matériau (13, 30, 59) du tenon et au moins une partie du reste de l'arête (8, 9, 32, 43, 51, 54, 58) de coupe est dans le matériau différent (14, 31, 60),
et **en ce que** le tenon (37) étant excentré par rapport à l'axe de l'outil, on forme l'outil (1, 16, 20, 24) avec une arête (8, 9, 32, 43, 51) de coupe dont les zones multi-matières situées de part et d'autre de la pointe de l'outil (1, 16, 20, 24) ne sont pas de longueurs égales.

10. Procédé selon la revendication 9, **caractérisé en ce que** l'assemblage des matériaux (13, 14, 30, 31, 59, 60) se fait par un brasage sous vide à une température supérieure à 700°C.

11. Procédé selon la revendication 9, **caractérisé en ce que** l'assemblage est effectué par impulsions crénelées de haute intensité d'une charge et d'un courant, et/ou d'un laser dans des poudres.

12. Procédé selon l'une quelconque des revendications 9 à 11, **caractérisé en ce que**, on met de plus l'outil sous pression pour obtenir un refoulement et/ou un recouvrement des deux matériaux l'un dans l'autre et/ou l'un sur l'autre, pour assurer la continuité de l'arête.

13. Procédé selon l'une quelconque des revendications 9 à 12, **caractérisé en ce que** on réalise une encoche sur l'arête de coupe à un emplacement différent de l'interface entre les deux matériaux.

## Patentansprüche

1. Drehendes Schneidwerkzeug aus mehreren Werkstoffen mit mindestens einer durchgehenden oder im Wesentlichen durchgehenden Schneidekante (8, 9, 32, 43, 51, 54, 58), die aus mindestens zwei verschiedenen aufeinanderfolgenden Werkstoffen (13, 14, 30, 31, 59, 60) besteht, wobei das Werkzeug einen sich um eine Achse erstreckenden Kern und mindestens eine Lippe oder ein Gewinde umfasst, das mit der durchgehenden oder im Wesentlichen durchgehenden Schneidekante endet, wobei die Mitte bzw. der innere radiale Teil des Kerns und der distale Teil der Lippe oder des Gewindes aus einem ersten Material bestehen, das eine geringe Schneidegeschwindigkeit (V_{c} < 50 m/mn) zulässt, und der Umfang bzw. der äußere radiale Teil des Werkzeugkerns und der proximale Teil der Lippe oder des Gewindes, der mit der entsprechenden Schneidekante endet, aus einem zweiten Material bestehen, dass eine hohe Schneidgeschwindigkeit (V_{c} > 500 m/mn) zulässt, wobei die durchgehende oder im Wesentlichen durchgehende Schneidekante (8, 9, 32, 43, 51, 54, 58) insgesamt radial in Bezug auf die Drehachse (5, 28) des Werkzeugs ist und der Drehachse am nächsten aus dem ersten Material (13, 30, 59) und der Achse am entferntesten aus dem zweiten Material (14, 31, 60) besteht, **dadurch gekennzeichnet, dass** das Ende bzw. der Scheitel des Werkzeugs ein in Bezug auf die Drehachse des Werkzeugs exzentrischer Punkt ist.

2. Werkzeug nach Anspruch 1, **dadurch gekennzeichnet, dass** einer der Werkstoffe (13, 30, 59) ein metallischer Werkstoff oder ein Werkstoff aus Karbid mit metallischem Bindemittel ist und der andere Werkstoff (14, 31, 60) ein keramischer Werkstoff oder ein Verbundwerkstoff mit keramischer Matrix ist.

3. Werkzeug nach Anspruch 2, **dadurch gekennzeichnet, dass** der Werkstoff mit metallischem Bindemittel (13, 30, 59) Wolframkarbid mit einem Kobalt-Bindemittel ist.

4. Werkzeug nach einem beliebigen der vorhergehenden Ansprüche, **dadurch gekennzeichnet, dass** es eine Spanbruchkerbe auf der Schneidekante an der Werkstoffübergangsstelle aufweist.

5. Werkzeug nach einem beliebigen der Ansprüche 1 bis 3, **dadurch gekennzeichnet, dass** es eine Spanbruchkerbe auf der Schneidekante aufweist, welche in Bezug auf die Werkstoffübergangsstelle versetzt ist.

6. Werkzeug nach einem beliebigen der vorhergehenden Ansprüche, **dadurch gekennzeichnet, dass** es eine Schneidekante aufweist, die aus mindestens drei aufeinanderfolgenden Werkstoffen besteht.

7. Werkzeug nach einem beliebigen der vorhergehenden Ansprüche, **dadurch gekennzeichnet, dass** die Schneidekante im Wesentlichen durchgehend ist und zwischen verschiedenen Werkstoffen eine Kerbe mit einer Breite e aufweist, die geringer ist als 2 mm.

8. Werkzeug nach einem beliebigen der Ansprüche 1 bis 6, **dadurch gekennzeichnet, dass** die Schneidekante durchgehend ist.

9. Verfahren zur Herstellung eines Schneidwerkzeugs, das sich um eine Achse erstreckt und geeignet ist, um die Achse zu drehen, bei dem ausgehend von einer Längsstange (35, 44) aus einem ersten Werkstoff (13, 30, 59) und von mindestens einer Platte mit einer Dicke l aus einem unterschiedlichen Werkstoff (14, 31, 60) die Platte auf ein Ende der Stange (35, 44) mit einer mit dem Ende der Stange komplementär ausgebildeten Verbindungsstelle gesetzt wird, diese durch Löten, Aufschrumpfen, Schweißen, Diffusion oder Impulse einer Ladung oder eines elektrischen Stroms in einem Pulver verbunden werden, anschließend die Stange (35, 44) und die Platte, die derart verbunden sind, durch Schleifen der Schneidwinkel auf einer ausreichenden Höhe h geschliffen werden, um mindestens eine durchgehende oder im Wesentlichen durchgehende Schneidekante (8, 9, 32, 43, 51, 54, 58) aus den zwei Werkstoffen (13, 14, 30, 31, 59, 60) zu bilden, **dadurch gekennzeichnet, dass** das Ende der Stange (35, 44) zylindrisch ist und einen Zapfen (37) mit einem geringeren Querschnitt in Bezug auf den Stangendurchmesser aufweist und die Platte eine Ausnehmung (42) aufweist, die komplementär zu dem vor der Verbindung darin eingesetzten Zapfen ausgebildet ist, Platte und Stange auf einer Höhe h < l geschliffen werden, um einen Werkzeugkopf (1, 16, 20, 24) zu bilden, bei dem der Scheitel aus dem ersten Werkstoff (13, 30, 59) des Zapfens besteht und mindestens ein Teil der restlichen Schneidekante (8, 9, 32, 43, 51, 54, 58) aus dem unterschiedlichen Werkstoff (14, 31, 60) besteht, und dass der Zapfen (37) exzentrisch ist in Bezug auf die Werkzeugachse, das Werkzeug (1, 16, 20, 24) mit einer Schneidekante (8, 9, 32, 43, 51) gebildet wird, deren aus mehreren Werkstoffen bestehende Bereiche beidseitig der Werkzeugspitze (1, 16, 20, 24) nicht gleich lang sind.

10. Verfahren nach Anspruch 9, **dadurch gekennzeichnet, dass** die Verbindung der Werkstoffe (13, 30 14, 30, 3 1, 59, 60) durch Vakuumlöten bei einer Temperatur von über 700 °C erfolgt.

11. Verfahren nach Anspruch 9, **dadurch gekennzeichnet, dass** die Verbindung durch zackenförmige Impulse hoher Intensität einer Ladung und eines Stroms und/oder eines Lasers in Pulver erfolgt.

12. Verfahren nach einem beliebigen der Ansprüche 9 bis 11, **dadurch gekennzeichnet, dass** das Werkzeug zusätzlich mit einem Druck beaufschlagt wird, um ein Ineinanderpressen und/oder ein Übereinanderlagern der zwei Werkstoffe zu erzielen, um die Durchgängigkeit der Kante sicherzustellen.

13. Verfahren nach einem beliebigen der Ansprüche 9 bis 12, **dadurch gekennzeichnet, dass** eine Kerbe auf der Schneidekante an einer Stelle gebildet wird, die sich von der Übergangsstelle zwischen den zwei Werkstoffen unterscheidet.

## Claims

1. Rotary cutting tool made of multiple materials, having at least one continuous or substantially continuous cutting edge (8, 9, 32, 43, 51, 54, 58) made of at least two successive different materials (13, 14, 30, 31, 59, 60), the tool comprising a core which is elongated about an axis and at least one lip or thread which is terminated by the continuous or substantially continuous cutting edge, the middle or inner radial part of the core and the distal part of the lip or the thread being formed of a first material allowing a low cutting speed (V_{c} < 50 m/min) and the periphery or outer radial part of the core of the tool, and the proximal part of the lip or the thread terminated by the corresponding cutting edge, being formed of a second material allowing a high cutting speed (V_{c} > 500 m/min), the continuous or substantially continuous cutting edge (8, 9, 32, 43, 51, 54, 58) being as a whole radial with respect to the axis of rotation (5, 28) of the tool, and made of the first material (13, 30, 59) in the zone closest to the axis of rotation and made of the second material (14, 31, 60) in the zone furthest from the axis, **characterised in that** the end or top of the tool is a point which is off-centre with respect to the axis of rotation of the tool.

2. Tool according to claim 1, **characterised in that** one of the materials (13, 30, 59) is a metallic or carbide based material with a metallic binder and the other material (14, 31, 60) is a ceramic material or composite material with a ceramic matrix.

3. Tool according to claim 2, **characterised in that** the material with the metallic binder (13, 30, 59) is tungsten carbide with a cobalt binder.

4. Tool according to any one of the preceding claims, **characterised in that** it comprises a chip-breaking notch on the cutting edge at the interface between materials.

5. Tool according to any one of claims 1 to 3, **characterised in that** it comprises a chip-breaking notch on the cutting edge which is offset with respect to the interface between materials.

6. Tool according to any one of the preceding claims, **characterised in that** it comprises a cutting edge made of at least three successive materials.

7. Tool according to any one of the preceding claims, **characterised in that** the cutting edge is substantially continuous and between different materials has a cutout with a width e of less than 2 mm.

8. Tool according to any one of claims 1 to 6, **characterised in that** the cutting edge is continuous.

9. Method for production of a cutting tool which is elongated about an axis and adapted to be able to rotate about said axis, in which, starting with a longitudinal bar (35, 44) made of a first material (13, 30, 59) and at least one plate with a thickness l made of a different material (14, 31, 60), the plate is positioned on one end of the bar (35, 44) having a junction surface with a shape complementary with the end of the bar, they are assembled by brazing, hooping, diffusion welding, or by pulsing a charge or an electric current into a powder, then the bar (35, 44) and the plate thus assembled are cut by grinding the cutting angles at a height h which is sufficient to obtain at least one continuous or substantially continuous cutting edge (8, 9, 32, 43, 51, 54, 58) made of the two materials (13, 14, 30, 31, 59, 60), **characterised in that** the end of the bar (35, 44) being cylindrical and comprising a tenon (37) with a section which is reduced with respect to the diameter of the bar, and the plate having a recess (42) with a shape complementary to said tenon which was inserted in it before assembly, the plate and the bar are cut at a height h < l to form a tool head (1, 16, 20, 24) of which the tip is in the first material (13, 30, 59) of the tenon and at least a part of the remainder of the cutting edge (8, 9, 32, 43, 51, 54, 58) is in the different material (14, 31, 60),
and **in that** the tenon (37) being off-centre with respect to the axis of the tool, the tool (1, 16, 20, 24) is formed with a cutting edge (8, 9, 32, 43, 51) the multi-material zones of which situated on either side of the tip of the tool (1, 16, 20, 24) are not of equal lengths.

10. Method according to claim 9, **characterised in that** the assembly of the materials (13, 14, 30, 31, 59, 60) is effected by vacuum brazing at a temperature of more than 700°C.

11. Method according to claim 9, **characterised in that** the assembly is effected by high-intensity square-wave pulses of a charge and a current, and/or of a laser into powders.

12. Method according to any one of claims 9 to 11, **characterised in that** the tool is also subjected to pressing to obtain upsetting and/or overlapping of the two materials one in the other and/or one on the other, to ensure the continuity of the edge.

13. Method according to any one of claims 9 to 12, **characterised in that** a notch is formed on the cutting edge in a different location to the interface between the two materials.
